(19) Europäisches Patentamt
European Patent Office
Office européen des brevets

(11) **EP 4 507 206 A1**

(12) **EUROPEAN PATENT APPLICATION**
published in accordance with Art. 153(4) EPC

(43) Date of publication:
**12.02.2025 Bulletin 2025/07**

(21) Application number: **22936193.6**

(22) Date of filing: **08.04.2022**

(51) International Patent Classification (IPC):
**H04B 7/024** (2017.01)     **H04L 25/02** (2006.01)

(52) Cooperative Patent Classification (CPC):
**H04B 7/024; H04L 25/02**

(86) International application number:
**PCT/CN2022/085901**

(87) International publication number:
**WO 2023/193255 (12.10.2023 Gazette 2023/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **XU, Weijie
  Dongguan, Guangdong 523860 (CN)**
• **ZUO, Zhisong
  Dongguan, Guangdong 523860 (CN)**
• **ZHANG, Zhi
  Dongguan, Guangdong 523860 (CN)**

(74) Representative: **RGTH
Patentanwälte PartGmbB
Neuer Wall 10
20354 Hamburg (DE)**

(54) **WIRELESS COMMUNICATION METHOD AND DEVICE**

(57)     A wireless communication method and a device are provided. The method includes: transmitting, by a first device, a first signal to a second device, where the first signal is backscatter-transmitted by the first device based on a second signal, a symbol length corresponding to the first signal is N times a symbol length corresponding to the second signal, and the second signal is transmitted by a third device, where N is a positive integer greater than 1.

200

FIG. 6

**Description**

TECHNICAL FIELD

Embodiments of the present application relate to the field of communications, and in particular to, a wireless communication method and a device.

BACKGROUND

In zero power consumption communication, a zero power consumption device receives a carrier signal transmitted by a network device, modulates the carrier signal to load information that needs to be transmitted, and radiates a modulated signal from an antenna. This information transmission process is referred to as backscatter communication.

A carrier signal and a backscatter signal interfere with each other, in a case where a large number of zero power consumption devices access to a system, an interference problem is more serious. Therefore, how to reduce the interference caused by large-scale deployment of zero power consumption devices is an urgent problem that needs to be solved.

SUMMARY

The present application provides a wireless communication method and a device, which are beneficial to reducing interference of a carrier signal on a backscatter signal.

In a first aspect, a wireless communication method is provided, which includes: transmitting, by a first device, a first signal to a second device, where the first signal is backscatter-transmitted by the first device based on a second signal, a symbol length corresponding to the first signal is N times a symbol length corresponding to the second signal, and the second signal is transmitted by a third device, where N is a positive integer greater than 1.

In a second aspect, a wireless communication method is provided, which includes: receiving, by a second device, a first signal transmitted by at least one first device, where the first signal is backscatter-transmitted based on a second signal, and a symbol length corresponding to the first signal is N times a symbol length corresponding to the second signal, where N is a positive integer greater than 1.

In a third aspect, a wireless communication method is provided, which includes: transmitting, by a third device, a second signal to a second device, where the second signal is used by a first device to perform backscatter to obtain a first signal, and a symbol length corresponding to the first signal is N times a symbol length corresponding to the second signal, where N is a positive integer greater than 1.

In a fourth aspect, a communication device is provided for performing the method in the first aspect or various implementations thereof.

Specifically, the communication device includes a functional module for performing the method in any one of the first aspect to third aspect or various implementations thereof.

In a fifth aspect, a communication device is provided and includes a processor and a memory. The memory is configured to store a computer program, and the processor is configured to call and run the computer program stored in the memory to perform the methods in any one of the first aspect to third aspect or various implementations thereof.

In a sixth aspect, a chip is provided for implementing the method in any one of the first aspect to third aspect or various implementations thereof. Specifically, the chip includes: a processor, configured to call and run a computer program from a memory, to cause a device equipped with the device to perform the method in any one of the first aspect to third aspect or various implementations thereof.

In a seventh aspect, a computer-readable storage medium is provided for storing a computer program, where the computer program causes a computer to perform the method of any one of the first aspect to third aspect or various implementations thereof.

In an eighth aspect, a computer program product is provided and includes computer program instructions, where the computer program instructions cause a computer to perform the method in any one of the first aspect to third aspect or various implementations thereof.

In a ninth aspect, a computer program is provided, where the computer program, when executed on a computer, causes the computer to perform the method in any one of the first aspect to third aspect or various implementations thereof.

Through above technical solutions, by designing a symbol length of a backscatter signal to be N times a symbol length of a carrier signal, it is beneficial to convert interference of the backscatter signal on the carrier signal into multipath effect, thereby improving system performance.

BRIEF DESCRIPTION OF THE DRAWINGS

FIG. 1 is a schematic diagram of architecture of a communication system provided by embodiments of the present application.

FIG. 2 is a schematic diagram of a zero power consumption communication system according to an example of the present application.

FIG. 3 is a principle diagram of power harvesting according to an embodiment of the present application.

FIG. 4 is a principle diagram of backscatter communication according to an embodiment of the present application.

FIG. 5 is a circuit principle diagram of resistive load modulation according to an embodiment of the present application.

FIG. 6 is a schematic interaction diagram of a wireless communication method provided according to embodiments of the present application.

FIG. 7 is a system model diagram of a wireless communication method according to embodiments of the present application.

FIG. 8 is a design diagram of a system frame of a wireless communication method according to embodiments of the present application.

FIG. 9 is another system model diagram of a wireless communication method according to embodiments of the present application.

FIG. 10 is a design diagram of a system frame of a wireless communication method according to embodiments of the present application.

FIG. 11 is a comparison diagram of achievable rates of a third device in two access schemes according to embodiments of the present application.

FIG. 12 is a comparison diagram of achievable rates of a backscatter device(s) in two access schemes according to embodiments of the present application.

FIG. 13 is a schematic block diagram of a communication device provided according to embodiments of the present application.

FIG. 14 is a schematic block diagram of another communication device provided according to embodiments of the present application.

FIG. 15 is a schematic block diagram of yet another communication device provided according to embodiments of the present application.

FIG. 16 is a schematic block diagram of yet still another communication device provided according to embodiments of the present application.

FIG. 17 is a schematic block diagram of a chip provided according to embodiments of the present application.

FIG. 18 is a schematic block diagram of a communication system provided according to embodiments of the present application.

DETAILED DESCRIPTION

Technical solutions in the embodiments of the present application will be described below with reference to the accompanying drawings in the embodiments of the present application. Obviously, the described embodiments are merely some but not all of embodiments of the present application. For the embodiments of the present application, all other embodiments obtained by the ordinary skilled in the art without paying creative effort belong to the protection scope of the present application.

Technical solutions according to embodiments of the present application may be applied to various communication systems, such as a global system of mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial networks (NTN) system, a universal mobile telecommunications system (UMTS), a wireless local area network (WLAN), a wireless fidelity (WiFi), a 5th-generation (5G) communication system, a cellular Internet of Things system, a cellular passive Internet of Things system or other communication systems.

Generally speaking, traditional communication systems support a limited quantity of connections, which is easy to implement. However, with the development of communication technology, mobile communication systems will not only support traditional communication, but also support, for example, device to device (D2D) communication, machine to machine (M2M) communication, machine type communication (MTC), vehicle to vehicle (V2V) communication, or vehicle to everything (V2X) communication, and the embodiments of the present application may be applied to these communication systems as well.

Optionally, the communication systems in the embodiments of the present application may be applied to a carrier aggregation (CA) scenario, a dual connectivity (DC) scenario, and may also be applied to a standalone (SA) network deployment scenario.

Optionally, the communication system in the embodiments of the present application may be applied to an unlicensed spectrum, and the unlicensed spectrum may also be considered as a shared spectrum. Alternatively, the communication system in the embodiments of the present application may be applied to a licensed spectrum, and the licensed spectrum may be considered as an unshared spectrum.

In the embodiments of the present application, each embodiment will be described in conjunction with a network device and a terminal device. The terminal device may be referred to as a user equipment (UE), an access terminal, a user unit, a user station, a mobile station, a mobile platform, a remote station, a remote terminal, a mobile device, a user terminal, a terminal, a wireless communication device, a user agent, a user apparatus or the like.

In the embodiments of the present application, the network device may be a device used for communicating with a mobile device. The network device may be an access point (AP) in WLAN, a base station (Base Transceiver Station, BTS) in GSM or CDMA, or may also be a base station (NodeB, NB) in WCDMA, or may also be an evolutional base station (Evolutional Node B, eNB or eNodeB) in LTE, a relay station or access point, an in-vehicle device, a wearable device, a network device (gNB) in an NR network, a network device in a cellular Internet of Things, a network device in a cellular passive Internet of Things, a network device in a future evolutional public land mobile network (PLMN) network, a network device in an NTN network, or the like.

As an example but not a limitation, in the embodiments of the present application, the network device may have mobile characteristics. For example, the network device may be a mobile device. Optionally, the network device may be a satellite, or a balloon station. For example, the satellite may be a low earth orbit (LEO) satellite, a medium earth orbit (MEO) satellite, a geostationary earth orbit (GEO) satellite, or a high elliptical orbit (HEO) satellite. Optionally, the network device may also be a base station deployed on land, water, or other places.

In the embodiments of the present application, the network device may provide a service for a cell, and the terminal device communicates with the network device through a transmission resource (e.g., a frequency-domain resource, which is also referred to as a spectrum resource) used by the cell. The cell may be a cell corresponding to the network device (e.g., a base station), and the cell may belong to a macro base station, or may belong to a base station corresponding to a small cell. The small cell here may include a metro cell, a micro cell, a pico cell, a femto cell, or the like. These small cells have characteristics of small coverage range and low transmission power, which are applicable for providing a data transmission service with high speed.

The terminal device may be a station (ST) in the WLAN, which may be a cellular phone, a cordless phone, a session initiation protocol (SIP) phone, a wireless local loop (WLL) station, a personal digital assistant (PDA) device, a handheld device with wireless communication functions, a computing device or another processing device connected to a wireless modem, an in-vehicle device, a wearable device, a terminal device in a next generation communication system (e.g., an NR network), or a terminal device in a future evolved public land mobile network (PLMN) network, a terminal device in a cellular Internet of Things, a terminal device in a cellular passive Internet of Things, or the like.

In the embodiments of the present application, the terminal device may be deployed on land including indoor or outdoor, handheld, wearable, or in-vehicle; alternatively, the terminal device may be deployed on water (e.g., on a steamship); alternatively, the terminal device may be deployed in air (e.g., on an airplane, on a balloons, or on a satellite).

In the embodiments of the present application, the terminal device may be a mobile phone, a pad, a computer with a wireless transceiving function, a virtual reality (VR) terminal device, an augmented reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in smart city, a wireless terminal device in smart home, or the like.

As an example but not a limitation, in the embodiments of the present application, the terminal device may be a wearable device. The wearable device may be referred to as a wearable smart device, which is a general term of wearable devices developed by intelligent design and development on daily wear by applying wearable technology, such as glasses, gloves, watches, clothing and shoes. The wearable device is a portable device that is worn directly on a body, or integrated into clothes or accessories of users. The wearable device not only is a hardware device, but also implements powerful functions through software support as well as data interaction or cloud interaction. Generalized wearable smart devices include devices that are fully functional, large in size, and may implement complete or partial functions without relying on smart phones, such as smart watches or smart glasses, as well as devices that only focus on a certain type of application functions and need to be used in conjunction with other devices (e.g., smart phones), such as various smart bracelets and smart jewelry that are used for monitoring physical signs.

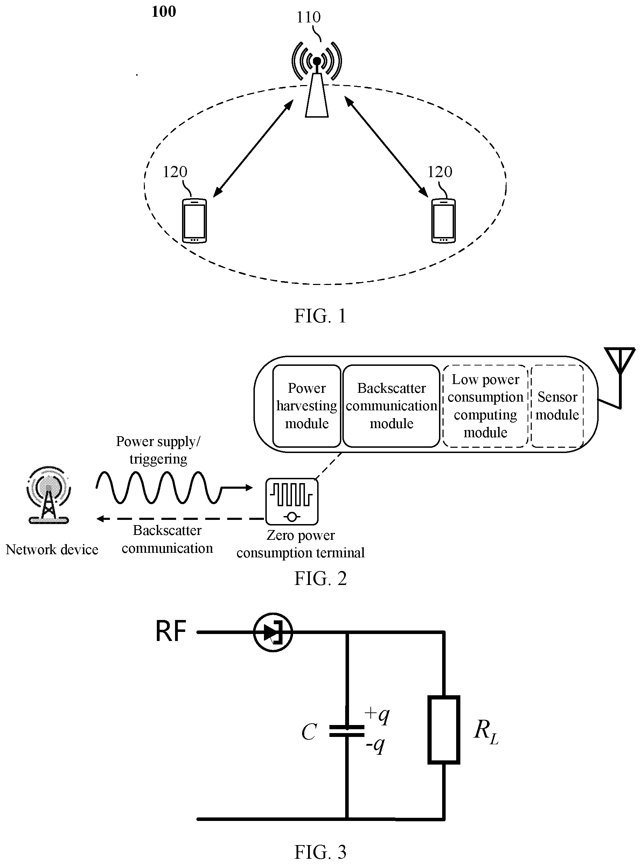

For example, a communication system 100 applied in the embodiments of the present application is shown in FIG. 1. The communication system 100 may include a network device 110, and the network device 110 may be a device that communicates with a terminal device 120 (which also referred to as a communication terminal or a terminal). The network device 110 may provide communication coverage for a specific geographical area and may communicate with terminal devices located within the coverage.

FIG. 1 exemplarily shows one network device and two terminal devices; optionally, the communication system 100 may include a plurality of network devices, another number of terminal devices may be included within the coverage of each network device, and the embodiments of the present application are not limited thereto.

Optionally, the communication system 100 may further include a network controller, a mobility management entity, and other network entities, which are not limited in the embodiments of the present application.

It should be understood that devices with communication functions in the network/system in the embodiments of the present application may be referred to as communication devices. Considering the communication system 100 shown in FIG. 1 as an example, the communication device may include a network device 110 and terminal devices 120 with communication functions. The network device 110 and the terminal devices 120 may be the specific devices described above and will not be repeated here. The communication device may further include other devices in the communication system 100, such as a network controller, a mobility management entity, and other network entities, which are not limited in the embodiments of the present application.

It should be understood that the terms "system" and "network" are often used interchangeably herein. The term "and/or" herein is only an association relationship to describe associated objects, which indicates that there may be three kinds of relationships. For example, "A and/or B" may represent: A alone, both A and B, and B alone. In addition, a character "/" herein generally indicates that related objects before and after this character are in an "or" relationship.

It should be understood that "indicate" mentioned in embodiments of the present application may mean a direct indication or an indirect indication, or may represent that there is an association relationship. For example, A indicating B may mean that A directly indicates B, for example, B may be acquired through A; alternatively, A indicating B may mean that A indirectly indicates B, for example, A indicates C, and B may be acquired through C; alternatively, A indicating B may mean that there is an association relationship between A and B.

In the description of the embodiments of the present application, the term "correspond" may mean that there is a directly corresponding relationship or an indirectly corresponding relationship between the two, or may mean that there is an association between the two, or may mean a relationship of indicating and being indicated, or configuring and being configured, or the like.

In the embodiments of the present application, the term "predefined" may be achieved by pre-storing corresponding codes, tables or other approaches that may be used to indicate relevant information in the devices (e.g., including the terminal device and the network device), and the implementation is not limited in the present application. For example, "predefined" may refer to what is defined in a protocol.

In the embodiments of the present application, the term "protocol" may refer to a standard protocol in the field of communications, which may include, for example, an LTE protocol, an NR protocol, and related protocols applied in a future communication system, which will not be limited in the present application.

In order to facilitate the understanding of the technical solutions in the embodiments of the present application, the related art of the present application will be described.

I. Zero power consumption communication

Key technologies for the zero power consumption communication include power harvesting, backscatter communication and low power consumption technology.

As shown in FIG. 2, a typical zero power consumption communication system (e.g., a radio frequency identification (RFID) system) includes a network device and a zero power consumption device (e.g., an electronic tag). The network device is used to transmit a wireless power supply signal, a downlink communication signal to the zero power consumption device, and receive a backscatter signal from the zero power consumption device. A basic zero power consumption device includes a power harvesting module, a backscatter communication module, and a low power consumption computing module. In addition, the zero power consumption device may also have a memory for storing pieces of basic information (e.g., an object identification) or a sensor for acquiring sensing data (e.g., ambient temperature, and ambient humidity).

For example, the power harvesting module may harvest power carried by radio waves (radio waves emitted by a network device shown in FIG. 2) in space to drive the low power consumption computing module of the zero power consumption device and realize backscatter communication. After acquiring power, the zero power consumption device may receive a control command from the network device and transmit data to the network device based on the control signaling in a backscatter manner. The transmitted data may be data stored in the zero power consumption device itself (for example, an identification or pre-written information, such as production date, brand, or manufacturer of a product). The zero power consumption device may also be loaded with various sensors, so as to report data collected by various sensors based on zero power consumption mechanism.

The key technologies for zero power consumption communication will be described as follows.

1. Radio frequency power harvesting (RF Power Harvesting)

As shown in FIG. 3, a radio frequency power harvesting module harvests electromagnetic wave power in space based on a principle of electromagnetic induction, and then obtains power, required to drive a zero power consumption device to operate, for example, for driving a low power demodulation and modulation module, a sensor, and memory reading. Therefore, the zero power consumption device does not need a traditional battery.

2. Backscatter communication (Back Scattering)

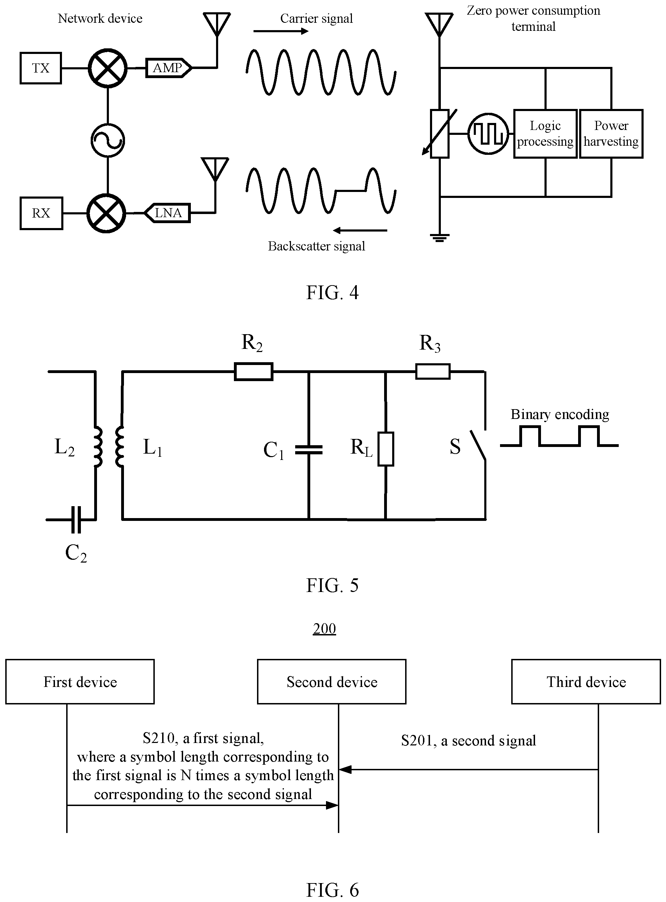

As shown in FIG. 4, the zero power consumption device receives a carrier signal transmitted by the network device, modulates the carrier signal, loads information that needs to be transmitted and radiates a modulated signal from an antenna. This information transmission process is referred to as backscatter communication. Backscatter and load modulation functions are inseparable from each other. Load modulation adjusts and controls circuit parameters of an oscillation loop of the zero power consumption device according to a beat of data stream, causing the parameters, such as a magnitude of impedance, of the zero power consumption device to change accordingly, thereby completing a process of modulation. Load modulation technology mainly includes two manners, i.e., resistive load modulation and capacitive load modulation. For resistive load modulation, a load is connected to a resistor in parallel, and the resistor is switched on or off based on a control of a binary data stream, as shown in FIG. 5. The on and off of the resistor will cause a circuit voltage to change, and thus an amplitude shift keying (ASK) modulation is achieved, that is, modulation and transmission of a signal is achieved by adjusting an amplitude of a backscatter signal of the zero power consumption device. Similarly, for capacitive load modulation, a resonant frequency of a circuit may be changed by switching on or off the capacitor to achieve a frequency shift keying (FSK) modulation, that is, modulation and transmission of a signal is achieved by adjusting an operating frequency of a backscatter signal of the zero power consumption device.

It can be seen that the zero power consumption device performs information modulation on an incoming signal by means of load modulation, thereby implementing a backscatter communication process. Therefore, the zero power consumption device has significant advantages that:

(1) the device does not actively transmit a signal, and thus a complex radio frequency link, such as, a power amplifier (PA) or a radio frequency filter, is not required;
(2) the device does not need to actively generate a high-frequency signal, and thus a high-frequency crystal oscillator is not required; and
(3) signal transmission of the terminal does not require to consume its own power by means of backscatter communication.

3. Coding technology

Data transmitted by a zero power consumption device may be represented as binary "1" and "0" by using different forms of codes. A radio frequency identification system usually uses one of the following encoding modes: reverse non-return-to-zero (NRZ) encoding, Manchester encoding, unipolar return-to-zero encoding, differential bi-phase (DBP) encoding, differential encoding, pulse interval encoding (PIE), bi-phase space encoding (FM0), Miller encoding, differential dynamic encoding, or the like. Generally speaking, different pulse signals are used to represent 0 and 1 through different encoding technologies.

In some scenarios, based on power sources and usage manners of zero power consumption devices, the zero power consumption devices may be classified into the following types.

1. Passive zero power consumption device

The zero power consumption device (e.g., an electronic tag in an RFID system) does not need a built-in battery. When the zero power consumption device approaches a network device (e.g., a reader-writer in the RFID system), the zero power consumption device is within a near field range formed by a radiation of an antenna of the network device. Therefore, the antenna of the zero power consumption device generates an induced current through electromagnetic induction and the induced current drives a low power consumption chip circuit of the zero power consumption device, so as to implement demodulation of a signal on a forward link and modulation of a signal on a backward link (or referred to as a backscatter link) and other operations. For a backscatter link, the zero power consumption device transmits a signal by means of backscatter.

It can be seen that the passive zero power consumption device does not need a built-in battery to drive either a forward link or a backward link, so that the passive zero power consumption device is a true zero power consumption device.

The passive zero power consumption device does not need a battery, and a radio frequency circuit and baseband circuit are very simple, for example, do not need a low-noise amplifier (LNA), a power amplifier (PA), a crystal oscillator, an analog-to-digital converter (ADC) and other devices. Therefore, the passive zero power consumption device has many advantages, such as small size, light weight, low price, and long service life.

2. Semi-passive zero power consumption device

The semi-passive zero power consumption device itself does not have a conventional battery installed, and may harvest radio wave power by using an RF power harvesting module and store harvested power in a power storage unit (e.g., a capacitor). After obtaining the power, the power storage unit may drive a low-power consumption chip circuit of the zero power consumption device to implement demodulation of a signal on a forward link, modulation of a signal on a backwark link and other operations. For a backscatter link, the zero power consumption device transmits signals by means of backscatter.

It can be seen that the semi-passive zero power consumption device does not need a built-in battery to drive either a forward link or a reverse link. Although the power stored in the capacitor will be used in operation, the power comes from the radio power harvested by the power harvesting module. Therefore, the semi-passive zero power consumption device is also a true zero power consumption device.

The semi-passive zero power consumption devices inherit many advantages of the passive zero power consumption device, so that the semi-passive zero power consumption devices have many advantages, such as small size, light weight, low price and long service life.

3. Active zero power consumption device

The zero power consumption device used in some scenarios may be an active zero power consumption device, and such a device may have a built-in battery. The battery is configured to drive a low power consumption chip circuit of the zero power consumption device to implement operations such as demodulation of a signal on a forward link signal and modulation of a signal on a backward link. However, for a backscatter link, the zero power consumption device transmits signals by means of backscatter. Therefore, zero power consumption of this type of devices is mainly reflected in the fact that the signal transmission on the reverse link does not need the terminal's own power, but uses a backscatter manner.

II. Cellular Passive Internet of Things

With the increasing of applications in 5G industry, there are more and more types and application scenarios of connected objects, and there will be higher requirements for cost and power consumption of a communication terminal. An application of a battery-free and low-cost passive Internet of Things device becomes a key technology for a cellular Internet of Things, so as to enrich types and quantity of 5G network-linked terminals, thereby truly achieving Internet of Everything. A passive Internet of Things device may be based on a zero power consumption communication technology, such as an RFID technology, and extend on this basis to be suitable for the cellular Internet of Things.

In order to facilitate the understanding of the embodiments of the present application, a power supply signal, a scheduling signal and a carrier signal related to zero power consumption communication will be described below.

1. Power supply signal

The power supply signal is a power source for the zero power consumption device to harvest power.

In terms of a carrier of the power supply signal, the carrier may be a base station, a smart phone, a smart gateway, a charging station, a micro base station, or the like.

In terms of a frequency band, the frequency band of a radio wave used for power supply may be a low frequency, a medium frequency, a high frequency, or the like.

In terms of a waveform, a radio wave used for power supply may be a sine wave, a square wave, a triangle wave, a pulse, a rectangular wave, or the like.

In addition, the power supply signal may be a continuous wave or a discontinuous wave (i.e., interruption within a certain time duration is allowed).

Optionally, the power supply signal may be an existing signal in the 3GPP standard, such as a sounding reference signal (SRS), a physical uplink shared channel (PUSCH), a physical random access channel (PRACH), a physical uplink control channel (PUCCH), a physical downlink control channel (PDCCH), a physical downlink shared channel (PDSCH), a physical broadcast channel (PBCH), a WIFI signal or a Bluetooth signal.

Optionally, the power supply signal may also be implemented by adding a new signal, for example, adding a new signal dedicated to supply power.

2. Trigger signal or scheduling signal

A trigger signal is used to trigger or schedule a zero power consumption device to transmit data.

In terms of a carrier of the trigger signal, the carrier may be a base station, a smart phone, a smart gateway, or the like.

In terms of a frequency band, a radio wave used for triggering or scheduling may be a low frequency, a medium frequency, a high frequency, or the like.

In terms of a waveform, a radio wave used for triggering or scheduling may be a sine wave, a square wave, a triangle wave, a pulse, a rectangular wave, or the like.

In addition, the trigger signal may be a continuous wave or a discontinuous wave (i.e., interruption within a certain time duration is allowed).

Optionally, the trigger signal may be an existing signal in the 3GPP standard, such as SRS, PUSCH, PRACH, PUCCH, PDCCH, PDSCH, PBCH, or a WIFI signal or Bluetooth signal.

Optionally, the trigger signal may also be implemented by adding a new signal, for example, adding a new signal dedicated to triggering or scheduling.

3. Carrier signal

A carrier signal is used by a zero power consumption device to generate a backscatter signal. For example, the zero power consumption device may modulate a received carrier signal according to information to be transmitted to form a backscatter signal.

In terms of a carrier of the carrier signal, the carrier may be a base station, a smart phone, a smart gateway, or the like.

In terms of a frequency band, a radio wave used as a carrier signal may be a low frequency, a medium frequency, a high frequency, or the like.

In terms of a waveform, a radio wave used as a carrier signal may be a sine wave, a square wave, a triangle wave, a pulse, a rectangular wave, or the like.

In addition, the carrier signal may be a continuous wave or a discontinuous wave (i.e., interruption within a certain time duration is allowed).

Optionally, the carrier signal may be an existing signal in the 3GPP standard, such as SRS, PUSCH, PRACH, PUCCH, PDCCH, PDSCH, PBCH, or a WIFI signal or Bluetooth signal.

Optionally, the carrier signal may also be implemented by adding a new signal, for example, adding a new carrier signal dedicated to generating a backscatter signal.

It should be noted that, in the embodiments of the present application, the power supply signal, scheduling signal and carrier signal may be a same signal or may be different signals. For example, the power supply signal may be used as a carrier signal, and the scheduling signal may also be used as a carrier signal.

A carrier signal and a backscatter signal interfere with each other, in a case where a large number of zero power consumption devices access to a system, an interference problem is more serious. Therefore, how to reduce the interference caused by large-scale deployment of zero power consumption devices is an urgent problem that needs to be solved.

To facilitate understanding of the technical solutions of the embodiments of the present application, the technical solutions of the present application will be described in detail below through specific embodiments. The above related arts, as optional solutions, may be arbitrarily combined with the technical solutions of the embodiments of the present application, and those combined solutions all fall within the protection scope of the embodiments of the present application. The embodiments of the present application include at least part of the following content.

FIG. 6 is a schematic interaction diagram of a wireless communication method 200 according to the embodiments of the present application. As shown in FIG. 6, the method 200 includes at least part of the following contents.

In S210, at least one first device transmits a first signal to a second device.

Correspondingly, the second device receives the first signal transmitted by the at least one first device.

In S201, a third device transmits a second signal.

Correspondingly, the second device receives the second signal.

In some embodiments, the first device obtains power for communication by power harvesting.

In some embodiments, the first device may be a zero power consumption device, such as an electronic tag.

In some embodiments, the first device is also referred to as a backscatter device (BD).

It should be understood that the present application does not limit specific manner in which the first device obtains power. As an example but not a limitation, the first device may obtain power by means of a power supply signal, solar power, ambient radio waves, or the like.

In some embodiments, the power supply signal is transmitted by a third device, or transmitted by the second device, or transmitted by a dedicated power supply node.

Optionally, the power supply signal may be transmitted continuously or intermittently. The first device harvests power based on the power supply signal. After obtaining sufficient power, the first device may perform corresponding communication processes, such as transmission of a pilot signal and data transmission.

In some embodiments, the first device is equipped with a power harvesting module for harvesting power, for example, harvesting power from radio waves and solar power, and furthermore, the first device stores the obtained power in a power storage unit. After obtaining sufficient power, the power storage unit may drive a chip circuit inside the first device to operate to perform demodulation of a signal on a forward link, modulation of a signal on a reverse link, and other operations.

In some embodiments, the second device may be a terminal device, such as various implementations of the terminal device 120 in the communication system shown in FIG. 1.

In some embodiments, the third device may be a network device, such as various implementations of the network device 110 in the communication system shown in FIG. 1. As an example, the third device may be a base station, an AP, a router, or the like; alternatively, the third device may be a relay node, a customer premise equipment (CPE), a reader-writer, or the like.

In some embodiments, the first device may communicate with other devices by means of backscatter.

For example, the first signal may be backscatter-transmitted based on the second signal transmitted by the third device.

Specifically, for example, the first device may load information to be transmitted on the second signal for backscatter to obtain the first signal.

That is, the first signal may be considered as a backscattered signal of the second signal, and the second signal is a carrier signal of the first signal.

In some embodiments, a signal transmitted by the third device may be considered as a main link signal, that is, the second signal may be a main link signal.

In some embodiments, the first device, second device and third device perform information interaction by means of symbiotic radio (SR). For example, the first device and third device perform information interaction by using overlapping time domain resources and/or overlapping frequency domain resources, and the signal transmitted by the first device and the signal transmitted by the third device may act as multipath signals rather than interference signals, which is beneficial to improving system performance.

In some embodiments, a symbol length corresponding to the first signal is N times a symbol length corresponding to the second signal, where N is a positive integer greater than 1. That is, a symbol period of the first signal is N times a symbol period of the second signal.

In other words, a symbol period of a backscatter signal is N times a symbol period of a carrier signal.

Therefore, in the embodiments of the present application, by designing the symbol period of the backscatter signal to be N times the symbol period of the carrier signal, it is beneficial to convert interference of the backscatter signal on the main link signal (i.e., the carrier signal) into a multipath effect, thereby improving system performance.

In some embodiments, the first signal and the second signal overlap at least partially in a time domain.

For example, time domain resources occupied by the first signal may include part or all of time domain resources occupied by the second signal.

As an example, the second signal occupies 10 slots, and the first device may perform backscatter on a second signal on a first slot of the 10 slots.

In some embodiments, the first signal and the second signal overlap at least partially in a frequency domain.

For example, frequency domain resources occupied by the first signal may include part or all of frequency domain resources occupied by the second signal.

As an example, the second signal occupies 20 MHz, and the first device may perform backscatter on the second signal on 1 MHz of 20 MHz.

In some embodiments, the first signal includes a pilot signal and/or a data signal.

Optionally, the pilot signal may be used for channel estimation by a receiving device (i.e., the second device) to determine channel state information (CSI) of a backscatter link corresponding to the first device.

Optionally, the data signal is used to carry information transmitted by the first device to the second device.

It should be understood that, in the embodiments of the present application, signal composition of first signals transmitted by different first devices may be same or different, which is not limited in the present application.

For example, first signals transmitted by all the first devices may each include a pilot signal and a data signal. Alternatively, first signals transmitted by some first devices may each only include a pilot signal, first signals transmitted by some other first devices may each include a pilot signal and a data signal, and first signals transmitted by some other first devices may each only include a data signal.

It should be understood that, in a case where a first signal includes a pilot signal and a data signal, an order in which the pilot signal and data signal are transmitted is not limited in the present application. For example, the pilot signal is before the data signal, or the pilot signal is after the data signal, or the pilot signal is within the data signal (i.e., the pilot signal is interspersed with the data signal).

In some embodiments, the second signal includes a pilot signal and/or a data signal.

Optionally, the pilot signal may be used for channel estimation by a receiving device (i.e., the second device) to determine CSI of a main link (or a direct link) corresponding to the third device.

Optionally, the data signal is used to carry information transmitted by the third device to the second device.

It should be understood that, in a case where a second signal includes a pilot signal and a data signal, an order in which the pilot signal and the data signal are transmitted is not limited in the present application. For example, the pilot signal is before the data signal, or the pilot signal is after the data signal, or the pilot signal is within the data signal (i.e., the pilot signal is interspersed with the data signal).

In some embodiments, the at least one first device transmitting the first signal to the second device includes: transmitting, by multiple first devices, first signals to the second device respectively.

It should be understood that, in the embodiments of the present application, the first signal is backscatter-transmitted based on the second signal, which may mean that the second signal is transmitted based on a main link signal; a first signal transmitted by a different first device may be backscatter-transmitted based on a same second signal or may be backscatter-transmitted based on a different second signal, which is not limited in the present application.

Optionally, the first signal transmitted by each first device includes a pilot signal and a data signal.

That is, each of the multiple first devices performs data transmission. This situation may be considered as a scheme of multiple backscatter devices simultaneous access. It should be understood that the simultaneous access here does not mean that the multiple backscatter devices transmit data at the same time, but means that the multiple backscatter devices each transmit data. The present application does not limit a timing of data transmission by a backscatter device.

Optionally, a first signal transmitted by a target first device of the multiple first devices includes a pilot signal and a data signal, and first signals transmitted by other first devices of the multiple first devices each include a pilot signal.

That is, only the target first device of the multiple first devices performs data transmission. This situation may be considered as a scheme of multiple backscatter devices diversity access.

In some embodiments, CSI of a backscatter link corresponding to the target first device of the multiple first devices is strongest.

Mode 1: the target first device may be determined from the multiple first devices by the third device.

For example, the second device may perform channel estimation according to pilot signals transmitted by the multiple first devices, and determine CSI of a backscatter link corresponding to each first device of the multiple first devices.

Optionally, the second device may transmit CSI of the multiple first devices to the third device.

Optionally, the third device may determine the target first device from the multiple first devices according to the CSI of the multiple first devices. For example, a first device with the strongest CSI is determined as the target first device.

Optionally, the third device may transmit first indication information to the target first device for indicating that the first device performs data transmission.

Further, the target first device may perform data transmission.

Mode 2: the target first device is determined from the multiple first devices by the second device.

For example, the second device may perform channel estimation according to pilot signals transmitted by the multiple first devices and determine CSI of a backscatter link corresponding to each first device of the multiple first devices.

Optionally, the second device may determine the target first device from the multiple first devices according to CSI of the multiple first devices. For example, a first device with the strongest CSI is determined as the target first device.

Mode 2-1: the second device may transmit second indication information to the target first device for indicating that the target first device performs data transmission.

Mode 2-2: the second device may transmit third indication information to the third device for indicating that the third device notifies the target first device to perform data transmission and/or that CSI corresponding to the target first device of the multiple first devices is strongest.

Optionally, the third indication information may be used for indicating identification information of the target first device.

After receiving the identification information of the target first device transmitted by the second device, the third device may determine to notify the target first device to perform data transmission, or determine that the target first device is the first device with the strongest CSI among the multiple first devices and further notify the target first device to perform data transmission.

Optionally, after receiving the third indication information, the third device may transmit first indication information to the target first device for indicating that the target first device performs data transmission.

Further, the target first device may perform data transmission.

In some embodiments, after receiving a second signal from the third device and a first signal transmitted by at least one first device, the second device needs to demodulate the second signal and at least one first signal to obtain main link information and information of at least one backscatter device therein.

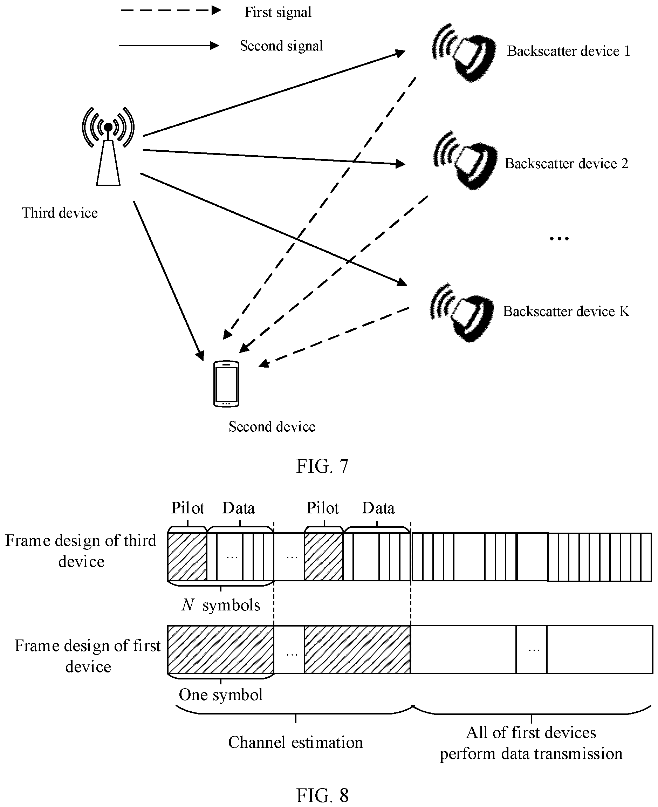

The wireless communication method in the embodiments of the present application will be described below in conjunction with FIGS. 7 to 10.

Embodiment I: a scheme of multiple backscatter devices simultaneous access. That is, multiple transmitting devices each perform data transmission.

FIG. 7 is a schematic diagram of a system model of a scheme of multiple backscatter devices simultaneous access provided by embodiments of the present application.

Specifically, a third device transmits a second signal, i.e., a main link signal.

Specifically, multiple backscatter devices load their own information to be transmitted on a main link signal, and transmit the information to be transmitted to a second device by mean of backscatter. A symbol period of a backscatter signal is N times a symbol period of the main link signal.

In some embodiments, the multiple backscatter devices perform access by means of symbiotic radio.

FIG. 8 is a design diagram of a frame structure based on the system model shown in FIG. 7.

As shown in FIG. 8, a third device and a backscatter device may transmit pilot signals firstly, and the second device may perform channel estimation, based on the pilot signals, to determine CSI of a main link corresponding to the third device and CSI of a backscatter link corresponding to each backscatter device in multiple transmitting devices.

Further, the third device and multiple transmitting devices may each perform data transmission.

That is, based on the scheme of multiple backscatter devices simultaneous access, a frame transmitted by the backscatter devices may include pilot signals respectively transmitted by the multiple backscatter devices and data signals respectively transmitted by the multiple backscatter devices.

Optionally, the pilot signals transmitted by the multiple backscatter devices may be before the data signals transmitted by the multiple backscatter devices.

System performances based on the scheme of multiple backscatter devices simultaneous access will be described by taking an example in which the third device, the backscatter devices and the second device are each configured with a single antenna. The situation of multiple antennas is similar, which will not be repeated here. A second signal transmitted by the third device is denoted as $s(n)$, and a first signal transmitted by a backscatter device i is denoted as $c_i$.

Then, the second device will receive two signals: a main link signal from the third device and backscatter link signals from K backscatter devices. A received signal may be expressed as:

$$y(n) = \sqrt{p}h_0 s(n) + \sqrt{p}\sum_{i=1}^{K} \alpha_i g_i h_i c_i s(n) + u(n) \qquad (1)$$

where P is a transmitting power of the third device; $h_0$ is a channel attenuation coefficient between the third device and the second device, which obeys a distribution of $h_0 \sim CN(0, \lambda_1)$; $h_i$ is a channel attenuation coefficient between the third device and the backscatter device i, which obeys a distribution of $h_i \sim CN(0, \lambda_h)$; $g_i$ is a channel attenuation coefficient between the backscatter device i and the second device, which obeys a distribution of $g_i \sim CN(0, \lambda_g)$; $\alpha_i$ is a backscatter coefficient of the backscatter device i, which is assumed here without loss of generality that $\alpha_i = \alpha, \forall i$; $u(n)$ obeys a cyclically symmetric complex Gaussian distribution with mean 0 and power $\sigma^2$, i.e., $u(n) \sim CN(0, \sigma^2)$.

Optionally, the second device jointly demodulates $s(n)$ and $\{c_i\}_{i=1}^{K}$ by using maximum likelihood (ML).

For a given $\{c_i\}_{i=1}^{K}$, an obtained signal-to-noise ratio $\gamma_s$ of $s(n)$ is expressed as:

$$\gamma_s = \frac{p \, | \, h_0 + \alpha \sum_{i=1}^{K} g_i h_i c_i \, |^2}{\sigma^2} \qquad (2)$$

The signal-to-noise ratio contains $\{c_i\}_{i=1}^{K}$, an achievable rate $R_s$ of the information transmitted by the third device is expressed as:

$$R_s = E_{\{c_i\}_{i=1}^{K}} \left[ \log_2 \left( 1 + \gamma_s \right) \right] \qquad (3)$$

In a case of a high signal-to-noise ratio, the achievable rate $R_s$ of the information transmitted by the third device may be further expressed as:

$$R_s \approx E_{\{c_i\}_{i=1}^K}\left[\log_2\left(\gamma_s\right)\right] = \log_2\left(\frac{p\,|h_0|^2}{\sigma^2}\right) - \log_2 e\,\mathrm{Ei}\left(-\frac{|h_0|^2}{\alpha^2 \sum_{i=1}^K |g_i h_i|^2}\right) \qquad (4)$$

For a given *s(n)*, the second device demodulates $c_1,...,c_K$ by using successive interference cancellation (SIC) to obtain a signal-to-noise ratio $\gamma_{cj}$ of information of a backscatter device j, which is expressed as:

$$\gamma_{c_j} = \frac{N\alpha^2\,|g_j h_j|^2}{N\alpha^2 \sum_{i=j+1,}^K |g_i h_i|^2 + \sigma^2} \qquad (5)$$

Then, a sum rate (i.e., a sum of achievable rates) $R_{c,sum}$ of the information transmitted by the backscatter devices may be expressed as:

$$R_{c,sum} = \frac{1}{N}\log_2\left(1 + \frac{N\alpha^2 \sum_{i=1}^K |g_i h_i|^2}{\sigma^2}\right) \qquad (6)$$

Embodiment II: a scheme of multiple backscatter devices diversity access. That is, some of backscatter devices of the multiple backscatter devices each perform data transmission.

Optionally, in Embodiment II, only the backscatter device with the strongest backscatter link perform access, in other words, a backscatter device corresponding to the strongest CSI performs data transmission.

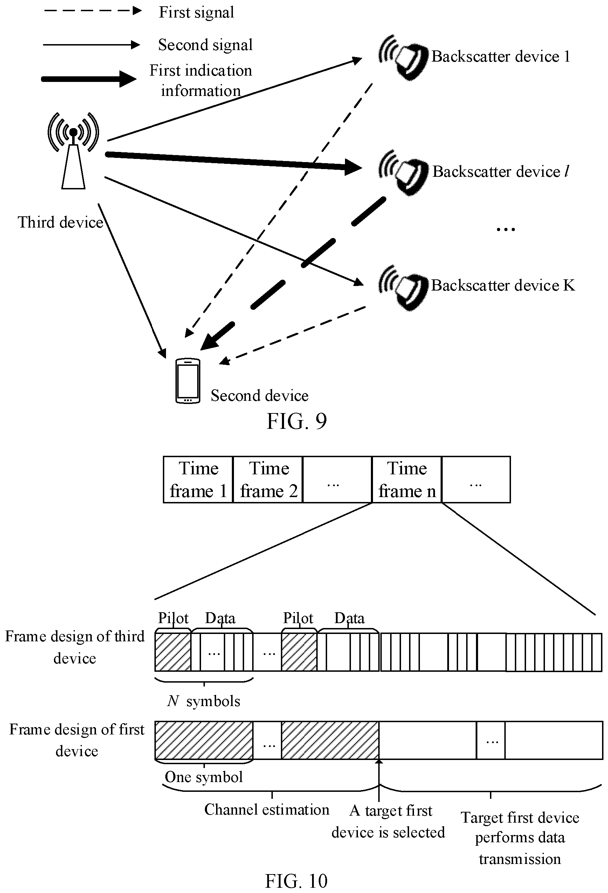

FIG. 9 is a schematic diagram of a system model of a scheme of multiple backscatter devices diversity access provided by embodiments of the present application.

Specifically, a third device and a backscatter device each transmit a pilot signal firstly, i.e., main link signal.

For example, multiple backscatter devices backscatter-transmit pilot signals based on main link signals. A symbol period of a pilot signal transmitted by a first device is N times a symbol period of a pilot signal transmitted by the third device.

The second device performs channel estimation based on the pilot signal transmitted by the third device and the pilot signal transmitted by the backscatter device, and determines CSI of a main link corresponding to the third device and CSI corresponding to a backscatter link of each transmitting device in the multiple transmitting devices.

Case 1: the second device may transmit CSI of the multiple transmitting devices to the third device.

Further, the third device determines a target backscatter device according to the CSI of the multiple backscatter devices, and then transmits first indication information to the target backscatter device for indicating that the target backscatter device performs data transmission.

Case 2: the second device determines a target backscatter device according to CSI of the multiple backscatter devices.

Case 2-1: the second device may transmit second indication information to the target backscatter device for indicating that the target backscatter device performs data transmission.

Case 2-2: the second device may transmit third indication information to the third device for indicating that the third device notifies the target backscatter device to perform data transmission and/or that the target backscatter device is a backscatter device corresponding to the strongest CSI among the multiple backscatter devices.

For example, the third indication information may be used for indicating identification information of the target backscatter device.

The third device that receives the third indication information may further transmit first indication information to the target backscatter device for indicating that the target backscatter device performs data transmission.

FIG. 10 is a design diagram of a frame structure of the system model shown in FIG. 9.

As shown in FIG. 10, the third device and the backscatter devices may transmit pilot signals firstly, and the second device may perform channel estimation based on the pilot signals to determine CSI of a main link corresponding to the third device and CSI of a backscatter link corresponding to each backscatter device of the multiple backscatter devices.

Further, a target backscatter device is selected based on the CSI of the multiple backscatter devices. For example, a backscatter device with the strongest CSI is selected as the target backscatter device. Then, the target backscatter device performs data transmission.

That is, a frame transmitted by backscatter devices may include pilot signals transmitted by the multiple backscatter devices and a data signal transmitted by the target backscatter device.

System performances based on the scheme of multiple backscatter devices diversity access will be described by taking an example in which the third device, the backscatter device and the second device are each configured with a single antenna. The situation of multiple antennas is similar, which will not be repeated here. A second signal transmitted by the third device is denoted as $s(n)$, and a first signal transmitted by a backscatter device i is denoted as $c_i$.

Then, a signal y(n) received by the second device may be expressed as:

$$y(n) = \sqrt{p}h_0 s(n) + \sqrt{p}\alpha g_l h_l c_l s(n) + u(n) \tag{7}$$

where $l = \arg\max_i |g_i h_i|^2$, similarly, an achievable rate $R_s$ of information transmitted by the third device may be expressed as:

$$R_s = E_{\{c_i\}_{i=1}^K}\left[\log_2\left(1 + \frac{p|h_0 + \alpha g_l h_l c_l|^2}{\sigma^2}\right)\right] \tag{8}$$

In a case of a high signal-to-noise ratio, the achievable rate of information transmitted by the third device may be further expressed as:

$$R_s \approx \log_2\left(\frac{p|h_0|^2}{\sigma^2}\right) - \log_2 e\,\mathrm{Ei}\left(-\frac{|h_0|^2}{\alpha^2 \max_i |g_i h_i|^2}\right) \tag{9}$$

A sum rate (i.e., a sum of achievable rates) $R_{c,sum}$ of information transmitted by the transmitting devices is expressed as:

$$R_{c,sum} = \frac{1}{N}\log_2\left(1 + \frac{N\alpha^2 \max_i |g_i h_i|^2}{\sigma^2}\right) \tag{10}$$

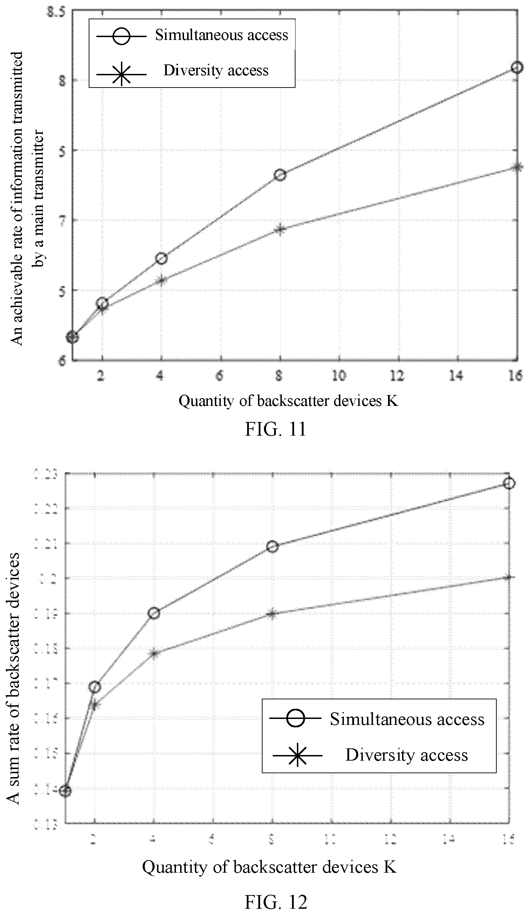

FIG. 11 is a comparison diagram of achievable rates of information transmitted by the third device obtained by simulating based on the above two access schemes, and FIG. 6 is a comparison diagram of achievable rates of information transmitted by backscatter device(s) obtained by simulating based on the above two access schemes. In the simulation, parameters are set as follows: $N = 64$, $\sigma^2 = 1$, $p = 100$, $\alpha = 0.5$, $\lambda_l = \lambda_h = \lambda_g = 1$.

It can be seen from FIGS. 11 and 12 that, for multiple backscatter devices simultaneous access and multiple backscatter devices diversity access, an achievable rate of information transmitted by the third device and an achievable rate of information transmitted by the backscatter device(s) both increase with the increase in the quantity of backscatter devices. In a case where the quantity of backscatter devices is 16, performance loss caused by multiple backscatter devices diversity access to the achievable rate of information transmitted by the third device is about 9.7%, and performance loss caused by multiple backscatter devices diversity access to the achievable rate of information transmitted by the backscatter devices is 13.4%. That is, the performance of the scheme of only accessing a backscatter device with a strongest link is 90% and more than 85% performance of the scheme of simultaneous access.

In summary, for the first access scheme, multiple backscatter devices all load information to be transmitted onto the main link signals and transmit them to the second device, and the second device needs to demodulate the information of the main link and the information of the multiple backscatter devices. For the second access scheme, only a backscatter device with the strongest backscatter link is selected for accessing, and the second device demodulates the information from the main link and the information from this backscatter device. In particular, an access manner of diversity access of backscatter device with the strongest CSI is simple to operate and has low complexity, and an achievable rate may reach more than 80% of an achievable rate of the simultaneous access scheme, which is conducive to realizing large-scale connections of Internet of Things devices under a condition of extremely limited spectrum and power, and the diversity access may serve as an effective alternative solution for large-scale Internet of Things access in the future.

In addition, by designing a symbol period of a backscatter signal to be N times a symbol period of main link information, compared with traditional ambient backscatter communication (AmBC) access, it is possible to convert interference of a backscatter signal on a main link signal into multipath effect, which is beneficial to improving system performance.

Furthermore, compared with active device access, a backscatter device access based on backscatter may achieve lower power consumption.

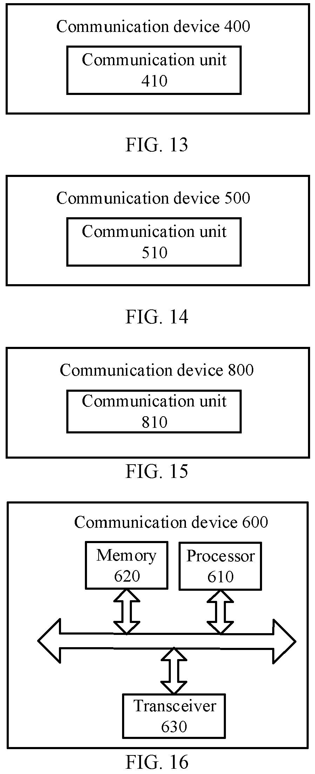

In combination with FIGS. 6 to 12, the method embodiments of the present application are described in detail above. Device embodiments of the present application will be described in detail in combination with FIGS. 13 to 18. It should be understood that the device embodiments and the method embodiments correspond to each other, and similar descriptions may refer to the method embodiments.

FIG. 13 shows a schematic block diagram of a communication device 400 according to the embodiments of the present application. As shown in FIG. 13, the communication device 400 includes:

a communication unit 410 configured to transmit a first signal to a second device, where the first signal is backscatter-transmitted by the communication device based on a second signal, a symbol length corresponding to the first signal is N times a symbol length corresponding to the second signal, and the second signal is transmitted by a third device, where N is a positive integer greater than 1.

In some embodiments, the first signal includes a pilot signal and/or a data signal.

In some embodiments, in a case where the first signal includes the pilot signal and data signal, the pilot signal is before the data signal, or the pilot signal is after the data signal, or the pilot signal is within the data signal.

In some embodiments, the communication unit 410 is further configured to:

receive first indication information transmitted by the third device, where the first indication information is used for indicating that the communication device performs data transmission.

In some embodiments, the first signal is transmitted in a case where the first indication information is received by the first device.

In some embodiments, the communication unit 410 is further configured to:

the communication device receives second indication information transmitted by the second device, where the second indication information is used for indicating that the communication device performs data transmission.

In some embodiments, the first signal is transmitted in a case where the second indication information is received by the communication device.

In some embodiments, the first signal and the second signal overlap at least partially in a time domain.

In some embodiments, the first signal and the second signal overlap at least partially in a frequency domain.

In some embodiments, the second device and the third device are a same device.

Optionally, in some embodiments, the communication unit may be a communication interface or a transceiver, or an input/output interface of a communication chip or a system on chip. A processing unit may be one or more processors.

It should be understood that the communication device 400 according to the embodiments of the present application may correspond to the first device in the method embodiments of the present application, and the above-mentioned and other operations and/or functions of each unit of the communication device 400 are respectively designed to implement the corresponding processes of the first device in the method embodiments shown in FIGS. 6 to 12, which will not be repeated here for the sake of brevity.

FIG. 14 shows a schematic block diagram of a communication device 400 according to the embodiments of the present application. As shown in FIG. 14, the communication device 400 includes:

a communication unit 510 configured to receive a first signal transmitted by at least one first device, where the first signal is backscatter-transmitted based on a second signal, and a symbol length corresponding to the first signal is N times a symbol length corresponding to the second signal, where N is a positive integer greater than 1.

In some embodiments, the first signal includes a pilot signal and/or a data signal.

In some embodiments, in a case where the first signal includes the pilot signal and data signal, the pilot signal is before the data signal, or the pilot signal is after the data signal, or the pilot signal is within the data signal.

In some embodiments, the second signal includes a pilot signal and/or a data signal.

In some embodiments, in a case where the second signal includes the pilot signal and data signal, the pilot signal is before the data signal, or the pilot signal is after the data signal, or the pilot signal is within the data signal.

In some embodiments, the communication unit 510 is further configured to:

transmit second indication information to a target first device, where the second indication information is used for indicating that the target first device performs data transmission.

In some embodiments, channel state information (CSI) corresponding to the target first device is strongest among multiple first devices.

In some embodiments, the communication unit 510 is further configured to:

transmit third indication information to a third device, where the third indication information is used for indicating that the third device notifies the target first device to perform data transmission and/or indicating that channel state information (CSI) corresponding to the target first device is strongest among multiple first devices.

In some embodiments, the third indication information is identification information of the target first device.

In some embodiments, the communication unit 510 is further configured to:

transmit CSI of multiple first devices to the third device.

In some embodiments, the CSI of the multiple first devices is used for the third device to determine the target first device among the multiple first devices.

In some embodiments, the CSI of the multiple first devices is obtained by the communication device performing channel estimation according to pilot signals transmitted by the multiple first devices.

In some embodiments, a first signal transmitted by the target first device of the multiple first devices includes a pilot signal and a data signal, and first signals transmitted by other first devices of the multiple first devices each include only a pilot signal.

In some embodiments, the first signal and the second signal overlap at least partially in a time domain.

In some embodiments, the first signal and the second signal overlap at least partially in a frequency domain.

Optionally, in some embodiments, the communication unit may be a communication interface or a transceiver, or an input/output interface of a communication chip or a system on chip. A processing unit may be one or more processors.

It should be understood that the communication device 500 according to the embodiments of the present application may correspond to the second device in the method embodiments of the present application, and the above-mentioned and other operations and/or functions of each unit in the communication device 500 are respectively designed to implement the corresponding processes of the second device in the method embodiments shown in FIGS. 6 to 12, which will not be repeated here for the sake of brevity.

FIG. 15 shows a schematic block diagram of a communication device 800 according to the embodiments of the present application. As shown in FIG. 15, the communication device 800 includes:

a communication unit 810 configured to transmit a second signal to a second device, where the second signal is used by a first device to perform backscatter to obtain a first signal, and a symbol length corresponding to the first signal is N times a symbol length corresponding to the second signal, where N is a positive integer greater than 1.

In some embodiments, the communication unit 810 is further configured to:

receive third indication information transmitted by the second device, where the third indication information is used for indicating that the communication device notifies a target first device to perform data transmission and/or that channel state information (CSI) corresponding to the target first device is strongest among the multiple first devices.

In some embodiments, the third indication information is identification information of the target first device.

In some embodiments, the communication unit 810 is further used to receive CSI of the multiple first devices transmitted by the second device.

In some embodiments, the communication device 800 further includes:

a processing unit configured to determine a target first device among the multiple first devices according to CSI of the multiple first devices.

In some embodiments, the communication unit 810 is further configured to:

transmit first indication information to the target first device of the multiple first devices, where the first indication information is used for indicating that the target first device performs data transmission.

In some embodiments, channel state information (CSI) corresponding to the target first device is strongest among the multiple first devices.

In some embodiments, the first signal and the second signal overlap at least partially in a time domain.

In some embodiments, the first signal and the second signal overlap at least partially in a frequency domain.

In some embodiments, the first signal includes a pilot signal and/or a data signal.

In some embodiments, in a case where the first signal includes the pilot signal and data signal, the pilot signal is before the data signal, or the pilot signal is after the data signal, or the pilot signal is within the data signal.

In some embodiments, the second signal includes a pilot signal and/or a data signal.

In some embodiments, in a case where the second signal includes the pilot signal and data signal, the pilot signal is before the data signal, or the pilot signal is after the data signal, or the pilot signal is within the data signal.

Optionally, in some embodiments, the communication unit may be a communication interface or a transceiver, or an input/output interface of a communication chip or a system on chip. The processing unit mentioned above may be one or more processors.

It should be understood that the communication device 800 according to the embodiments of the present application may correspond to the third device in the method embodiments of the present application, and the above-mentioned and other operations and/or functions of each unit in the communication device 800 are respectively designed to implement the corresponding processes of the third device in the method embodiments shown in FIGS. 6 to 12, which will not be repeated here for the sake of brevity.

FIG. 16 is a schematic structural diagram of a communication device 600 provided by the embodiments of the present application. The communication device 600 shown in FIG. 16 includes a processor 610, which may call a computer program from a memory and run the computer program to implement the methods in the embodiments of the present application.

Optionally, as shown in FIG. 16, the communication device 600 may further include a memory 620. The processor 610 may call a computer program from the memory 620 and run the computer program to implement the methods in the embodiments of the present application.

The memory 620 may be a separate device independent of the processor 610, or may be integrated into the processor 610.

Optionally, as shown in FIG. 16, the communication device 600 may further include a transceiver 630, and the processor 610 may control the transceiver 630 to communicate with other devices, specifically, to transmit information or data to other devices, or to receive information or data transmitted by other devices.

The transceiver 630 may include a transmitter and a receiver. The transceiver 630 may further include antenna(s), and a quantity of antennas may be one or more.

Optionally, the communication device 600 may specifically be the first device in the embodiments of the present application, and the communication device 600 may implement the corresponding processes implemented by the first device in each method in the embodiments of the present application, which will not be repeated here for the sake of brevity.

Optionally, the communication device 600 may specifically be the second device in the embodiments of the present application, and the communication device 600 may implement the corresponding processes implemented by the second device in each method in the embodiments of the present application, which will not be repeated here for the sake of brevity.

Optionally, the communication device 600 may specifically be the third device in the embodiments of the present application, and the communication device 600 may implement the corresponding processes implemented by the third device in each method in the embodiments of the present application, which will not be repeated here for the sake of brevity.

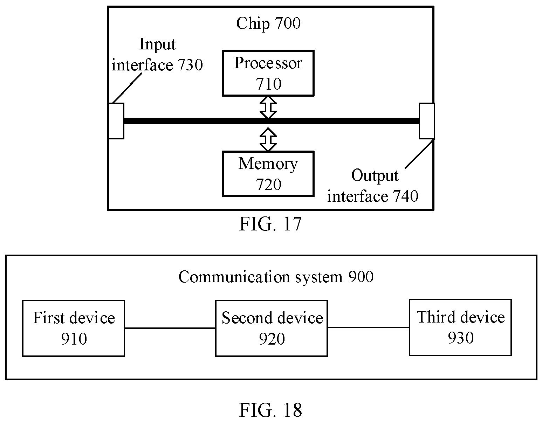

FIG. 17 is a schematic structural diagram of a chip in the embodiments of the present application. The chip 700 shown in FIG. 17 includes a processor 710, and the processor 710 may call a computer program from a memory and run the computer program to implement the methods in the embodiments of the present application.

Optionally, as shown in FIG. 17, the chip 700 may further include a memory 720. The processor 710 may call a computer program from the memory 720 and run the computer program to implement the methods in the embodiments of the present application.

The memory 720 may be a separate device independent of the processor 710, or may be integrated into the processor 710.

Optionally, the chip 700 may further include an input interface 730. The processor 710 may control the input interface 730 to communicate with other devices or chips, and specifically, to obtain information or data transmitted by other devices or chips.

Optionally, the chip 700 may further include an output interface 740. The processor 710 may control the output interface 740 to communicate with other devices or chips, and specifically, to output information or data to other devices or chips.

Optionally, the chip may be applied to the first device in the embodiments of the present application, and the chip may implement the corresponding processes implemented by the first device in each method in the embodiments of the present application, which will not be repeated here for the sake of brevity.

Optionally, the chip may be applied to the second device in the embodiments of the present application, and the chip may implement the corresponding processes implemented by the second device in each method in the embodiments of the present application, which will not be repeated here for the sake of brevity.

Optionally, the chip may be applied to the third device in the embodiments of the present application, and the chip may implement the corresponding processes implemented by the third device in each method in the embodiments of the present application, which will not be repeated here for the sake of brevity.

It should be understood that the chip mentioned in the embodiments of the present application may be referred to as a system-level chip, a system chip, a chip system, a system-on-chip, or the like.

FIG. 18 is a schematic block diagram of a communication system 900 provided by the embodiments of the present application. As shown in FIG. 18, the communication system 900 includes a first device 910, a second device 920, and a third device 930.

The first device 910 may be configured to implement the corresponding functions implemented by the first device in the above methods, the second device 920 may be configured to implement the corresponding functions implemented by the second device in the above methods, and the third device 930 may be configured to implement the corresponding functions implemented by the third device in the above methods, which will not be repeated here for the sake of brevity.

It should be understood that the processor in the embodiments of the present application may be an integrated circuit chip with signal processing capability. In the implementation process, each step in the above method embodiments may be completed by the instructions in a form of integrated logic circuit of hardware or software in the processor. The above processor may be a general purpose processor, a digital signal processor (DSP), an application specific integrated circuit (ASIC), a field programmable gate array (FPGA) or another programmable logic device, a discrete gate, a transistor logic device, or a discrete hardware component, which may implement or execute the disclosed methods, steps and logic block diagrams in the embodiments of the present disclosure. The general purpose processor may be a microprocessor, or the processor may be any conventional processor. The steps of the methods disclosed in conjunction with the embodiments of the present disclosure may be directly embodied in the execution completion of the hardware decoding processor, or may be completed by the combination of the hardware and software modules in the decoding processor. The software module may be located in a random memory, a flash memory, a read-only memory, a programmable read-only memory, an electrically erasable programmable memory, a register or other mature storage media in the art. The storage medium is located in the memory, and the processor reads the information in the memory and completes the steps of the above method in combination with its hardware.

It will be understood that the memory in the embodiments of the present application may be a volatile memory or a non-volatile memory, or may include both the volatile memory and non-volatile memory. The non-volatile memory may be a read-only memory (ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a random access memory (RAM), which is used as an external cache. As an example but not a limitation for illustration, many forms of the RAM are available, such as, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchlink DRAM, SLDRAM) and a direct Rambus random access memory (Direct Rambus RAM, DR RAM). It should be noted that the memory of the systems and methods described herein is intended to include, but is not limited to, these and any other suitable types of memories.

It should be understood that the above memory is exemplary but not limited illustration. For example, the memory in the embodiments of the present application may also be a static random access memory (static RAM, SRAM), a dynamic random access memory (dynamic RAM, DRAM), a synchronous dynamic random access memory (synchronous DRAM, SDRAM)), a double data rate synchronous dynamic random access memory (double data rate SDRAM, DDR SDRAM), an enhanced synchronous dynamic random access memory (enhanced SDRAM, ESDRAM), a synchronous link dynamic random access memory (synch link DRAM, SLDRAM), a direct Rambus random access memory (Direct Rambus RAM, DR RAM), etc. That is, the memory in the embodiments of the present application is intended to include, but not limited to, these and any other suitable types of memories.

The embodiments of the present application further provide a computer-readable storage medium for storing a computer program.

Optionally, the computer-readable storage medium may be applied to the first device in the embodiments of the present application, and the computer program causes a computer to perform the corresponding processes implemented by the first device in the various methods in the embodiments of the present application, which will not be repeated here for the sake of brevity.

Optionally, the computer-readable storage medium may be applied to the second device in the embodiments of the present application, and the computer program causes a computer to perform the corresponding processes implemented by the second device in the various methods in the embodiments of the present application, which will not be repeated here for the sake of brevity.

Optionally, the computer-readable storage medium can be applied to the third device in the embodiments of the present application, and the computer program causes a computer to perform the corresponding processes implemented by the third device in the various methods in the embodiments of the present application, which will not be repeated here for the sake of brevity.

The embodiments of the present application further provide a computer program product, including computer program instructions.

Optionally, the computer program product may be applied to the first device in the embodiments of the present application, and the computer program instructions cause a computer to perform the corresponding processes implemented by the first device in the various methods in the embodiments of the present application, which will not be repeated here for the sake of brevity.

Optionally, the computer program product may be applied to the second device in the embodiments of the present application, and the computer program instructions cause a computer to perform the corresponding processes implemented by the second device in the various methods in the embodiments of the present application, which will not be repeated here for the sake of brevity.

Optionally, the computer program product may be applied to the third device in the embodiments of the present application, and the computer program instructions cause a computer to perform the corresponding processes implemented by the third device in the various methods in the embodiments of the present application, which will not be repeated here for the sake of brevity.

The embodiments of the present application further provide a computer program.

Optionally, the computer program may be applied to the first device in the embodiments of the present application, and the computer program, when running on a computer, causes the computer to perform the corresponding processes implemented by the first device in the various methods in the embodiments of the present application, which will not be repeated here for the sake of brevity.

Optionally, the computer program may be applied to the second device in the embodiments of the present application, and the computer program, when running on a computer, causes the computer to perform the corresponding processes implemented by the second device in the various methods in the embodiments of the present application, which will not be repeated here for the sake of brevity.

Optionally, the computer program may be applied to the third device in the embodiments of the present application, and the computer program, when running on a computer, causes the computer to perform the corresponding processes implemented by the third device in the various methods in the embodiments of the present application, which will not be repeated here for the sake of brevity.

Those of ordinary skill in the art will appreciate that the units and algorithm operations of each example described in conjunction with the embodiments disclosed herein may be implemented by electronic hardware, or by the combination of computer software and electronic hardware. Whether these functions are performed in hardware or software depends on the specific application and design constraints of the technical solutions. A professional may use different methods to implement the described functions for each specific application, but such an implementation is not considered to be beyond the scope of the present application.

Those skilled in the art may clearly understand that for the convenience and brevity of the description, the specific operating processes of the system, apparatus and unit described above may refer to the corresponding procedures in the embodiments of the method above, and will not be repeated here.

In several embodiments provided by the present application, it should be understood that the disclosed system, device and method may be implemented in other ways. For example, the device embodiments described above are only schematic, for example, the division of the unit is only a logical functional division, and there may be another division way in the actual implementation, for example, multiple units or components may be combined or integrated into another system, or some features may be ignored or not implemented. On another aspect, the mutual coupling or direct coupling or communication connection illustrated or discussed may be indirect coupling or communication connection through some interfaces, apparatus or units, and may be electrical, mechanical or other forms.

The units described as separation parts may or may not be physically separated, and the component displayed as a unit may or may not be a physical unit, that is, it may be located at one place, or it may be distributed to multiple network units. Some or all of the units may be selected according to actual requirements to achieve the purpose of the schemes of the embodiments.

In addition, various functional units in each embodiment of the present application may be integrated into one processing unit, various units may exist physically alone, or two or more units may be integrated into one unit.

If the function is implemented in the form of a software functional unit and is sold or used as an independent product, it can be stored in a computer readable storage medium. Based on such an understanding, the technical solutions of the present application, in essence or the part that contributes to the prior art or the part of the technical solutions, may be embodied in the form of a software product, the computer software product is stored in a storage medium, includes multiple instructions for making a computer device (which may be a personal computer, a server, a network device, etc.) to perform all or part of the steps of the method according to various embodiment of the present application. The aforementioned storage media includes a media that may store a program code, such as a U disk, a mobile hard disk, a read-only memory (ROM), a random access memory (RAM), a disk, or an optical disk.

The foregoing descriptions are merely specific implementations of the present application, but the protection scope of the present application is not limited thereto. Any skilled person in the art could readily conceive of changes or replacements within the technical scope of the present application, which shall be all included in the protection scope of the present application. Therefore, the protection scope of the present application shall be subject to the protection scope of claims.

**Claims**

1. A wireless communication method, comprising:
   transmitting, by a first device, a first signal to a second device, wherein the first signal is backscatter-transmitted by the first device based on a second signal, a symbol length corresponding to the first signal is N times a symbol length corresponding to the second signal, and the second signal is transmitted by a third device, wherein N is a positive integer greater than 1.

2. The method of claim 1, wherein the first signal comprises a pilot signal and/or a data signal.

3. The method of claim 2, wherein in a case where the first signal comprises the pilot signal and data signal, the pilot signal is before the data signal, or the pilot signal is after the data signal, or the pilot signal is within the data signal.

4. The method of any one of claims 1 to 3, further comprising:
receiving, by the first device, first indication information transmitted by the third device, wherein the first indication information is used for indicating that the first device performs data transmission.

5. The method of claim 4, wherein the first signal is transmitted in a case where the first indication information is received by the first device.

6. The method of any one of claims 1 to 3, further comprising:
receiving, by the first device, second indication information transmitted by the second device, wherein the second indication information is used for indicating that the first device performs data transmission.

7. The method of claim 6, wherein the first signal is transmitted in a case where the second indication information is received by the first device.

8. The method of any one of claims 1 to 7, wherein the first signal and the second signal overlap at least partially in a time domain.

9. The method of claim 8, wherein the first signal and the second signal overlap at least partially in a frequency domain.

10. The method of any one of claims 1 to 9, wherein the second device and the third device are a same device.

11. A wireless communication method, comprising:
receiving, by a second device, a first signal transmitted by at least one first device, wherein the first signal is backscatter-transmitted based on a second signal, and a symbol length corresponding to the first signal is N times a symbol length corresponding to the second signal, wherein N is a positive integer greater than 1.

12. The method of claim 11, wherein the first signal comprises a pilot signal and/or a data signal.

13. The method of claim 12, wherein in a case where the first signal comprises the pilot signal and data signal, the pilot signal is before the data signal, or the pilot signal is after the data signal, or the pilot signal is within the data signal.

14. The method of any one of claims 11 to 13, wherein the second signal comprises a pilot signal and/or a data signal.

15. The method of claim 14, wherein in a case where the second signal comprises the pilot signal and data signal, the pilot signal is before the data signal, or the pilot signal is after the data signal, or the pilot signal is within the data signal.

16. The method of any one of claims 11 to 15, further comprising:
transmitting, by the second device, second indication information to a target first device, wherein the second indication information is used for indicating that the target first device performs data transmission.

17. The method of claim 16, wherein channel state information (CSI) corresponding to the target first device is strongest among multiple first devices.

18. The method of any one of claims 11 to 15, further comprising:
transmitting, by the second device, third indication information to a third device, wherein the third indication information is used for indicating that the third device notifies a target first device to perform data transmission and/or that channel state information (CSI) corresponding to the target first device is strongest among multiple first devices.

19. The method of claim 18, wherein the third indication information is identification information of the target first device.

20. The method of any one of claims 11 to 15, further comprising:
transmitting, by the second device, CSI of multiple first devices to a third device.

21. The method of claim 20, wherein the CSI of the multiple first devices are used for the third device to determine a target first device among the multiple first devices.

22. The method of claim 17, 18 or 20, wherein CSI of the multiple first devices is obtained by the second device performing channel estimation according to pilot signals transmitted by the multiple first devices.

23. The method of any one of claims 17 to 22, wherein a first signal transmitted by the target first device of the multiple first devices includes a pilot signal and a data signal, and first signals transmitted by remaining first devices of the multiple first devices each include only a pilot signal.

24. The method of any one of claims 11 to 23, wherein the first signal and the second signal overlap at least partially in a time domain.

25. The method of any one of claims 11 to 24, wherein the first signal and the second signal overlap at least partially in a frequency domain.

26. A wireless communication method, comprising:
transmitting, by a third device, a second signal to a second device, wherein the second signal is used by a first device to perform backscatter to obtain a first signal, and a symbol length corresponding to the first signal is N times a symbol length corresponding to the second signal, wherein N is a positive integer greater than 1.

27. The method of claim 26, further comprising:
receiving, by the third device, third indication information transmitted by the second device, wherein the third indication information is used for indicating that the third device notifies a target first device to perform data transmission and/or that channel state information (CSI) corresponding to the target first device is strongest among multiple first devices.

28. The method of claim 27, wherein the third indication information is identification information of the target first device.

29. The method of claim 26, further comprising:
receiving, by the third device, CSI of multiple first devices transmitted by the second device.

30. The method of claim 29, further comprising:
determining, by the third device, a target first device among the multiple first devices according to the CSI of the multiple first devices.

31. The method of claim 27 or 30, further comprising:
transmitting, by the third device, first indication information to the target first device of the multiple first devices, wherein the first indication information is used for indicating that the target first device performs data transmission.

32. The method of claim 27, 30 or 31, wherein channel state information (CSI) corresponding to the target first device is strongest among the multiple first devices.

33. The method of any one of claims 26 to 32, wherein the first signal and the second signal overlap at least partially in a time domain.

34. The method of any one of claims 26 to 33, wherein the first signal and the second signal overlap at least partially in a frequency domain.

35. The method of any one of claims 26 to 34, wherein the first signal comprises a pilot signal and/or a data signal.

36. The method of claim 35, wherein in a case where the first signal comprises the pilot signal and data signal, the pilot signal is before the data signal, or the pilot signal is after the data signal, or the pilot signal is in the data signal.

37. The method of any one of claims 26 to 36, wherein the second signal comprises a pilot signal and/or a data signal.

38. The method of claim 37, wherein in a case where the second signal includes a pilot signal and a data signal, the pilot signal is before the data signal, or the pilot signal is after the data signal, or the pilot signal is within the data signal.

39. A communication device, comprising:
a communication unit configured to transmit a first signal to a second device, wherein the first signal is backscatter-transmitted by the communication device based on a second signal, a symbol length corresponding to the first signal is N times a symbol length corresponding to the second signal, and the second signal is transmitted by a third device, wherein N is a positive integer greater than 1.

40. A communication device, comprising:
a communication unit configured to receive a first signal transmitted by at least one first device, wherein the first signal is backscatter-transmitted based on a second signal, and a symbol length corresponding to the first signal is N times a symbol length corresponding to the second signal, wherein N is a positive integer greater than 1.

41. A communication device, comprising:
a communication unit configured to transmit a second signal to a second device, wherein the second signal is used by a first device to perform backscatter to obtain a first signal, and a symbol length corresponding to the first signal is N times a symbol length corresponding to the second signal, wherein N is a positive integer greater than 1.

42. A communication device, comprising: a processor and a memory, wherein the memory is configured to store a computer program, the processor is configured to call and run the computer program stored in the memory to perform the method of any one of claims 1 to 10, or the method of any one of claims 11 to 25, or the method of any one of claims 26 to 38.

43. A chip, comprising: a processor configured to call and run a computer program from a memory to cause a device equipped with the chip to perform the method of any one of claims 1 to 10, or the method of any one of claims 11 to 25, or the method of any one of claims 26 to 38.

44. A computer-readable storage medium, configured to store a computer program, wherein the computer program causes a computer to perform the method of any one of claims 1 to 10, or the method of any one of claims 11 to 25, or the method of any one of claims 26 to 38.

45. A computer program product, comprising computer program instructions, wherein the computer program instructions cause a computer to perform the method of any one of claims 1 to 10, or the method of any one of claims 11 to 25, or the method of any one of claims 26 to 38.

46. A computer program, wherein the computer program causes a computer to perform the method of any one of claims 1 to 10, or the method of any one of claims 11 to 25, or the method of any one of claims 26 to 38.

**100**

110

120                                    120

FIG. 1

Power harvesting module | Backscatter communication module | Low power consumption computing module | Sensor module

Power supply/ triggering

Network device

Backscatter communication

Zero power consumption terminal

FIG. 2

RF

$C$    $+q$
       $-q$

$R_L$

FIG. 3

FIG. 4

FIG. 5

200

| First device | Second device | Third device |

S210, a first signal,
where a symbol length corresponding to
the first signal is N times a symbol length
corresponding to the second signal

S201, a second signal

FIG. 6

FIG. 7

FIG. 8

- - - - - ▶ First signal

─────────▶ Second signal

━━━━━▶ First indication
          information

Third device

Backscatter device 1

Backscatter device *l*

...

Backscatter device K

Second device

FIG. 9

| Time frame 1 | Time frame 2 | ... | Time frame n | ... |
|---|---|---|---|---|

Frame design of third device

Pilot  Data        Pilot   Data

*N* symbols

Frame design of first device

One symbol

Channel estimation    A target first device is selected

Target first device performs data transmission

FIG. 10

FIG. 11

FIG. 12

Communication device 400

Communication unit
410

FIG. 13

Communication device 500

Communication unit
510

FIG. 14

Communication device 800

Communication unit
810

FIG. 15

Communication device 600

Memory
620

Processor
610

Transceiver
630

FIG. 16

FIG. 17

FIG. 18

## INTERNATIONAL SEARCH REPORT

International application No.

**PCT/CN2022/085901**

### A. CLASSIFICATION OF SUBJECT MATTER

H04B 7/024(2017.01)i;  H04L 25/02(2006.01)i

According to International Patent Classification (IPC) or to both national classification and IPC

### B. FIELDS SEARCHED

Minimum documentation searched (classification system followed by classification symbols)

H04L; H04B

Documentation searched other than minimum documentation to the extent that such documents are included in the fields searched

Electronic data base consulted during the international search (name of data base and, where practicable, search terms used)

CNABS; CNTXT; WPABSC; ENTXT, CNKI: 零功耗, 低功耗, 物联网, 散射, 反射, 符号, 长度, 周期, 倍, 载波, 信号, 导频, 指示, 标识, RFID, D2D, MTC, M2M, V2V, back scattering, backscatter, symbol, length, period, times, multiple, carrier, signal, pilot frequency, indicate, ID, identifier

### C. DOCUMENTS CONSIDERED TO BE RELEVANT

| Category* | Citation of document, with indication, where appropriate, of the relevant passages | Relevant to claim No. |
|---|---|---|
| X | CN 110545128 A (SOUTHEAST UNIVERSITY) 06 December 2019 (2019-12-06) claim 1 | 1-46 |
| X | CN 110601738 A (SOUTHEAST UNIVERSITY) 20 December 2019 (2019-12-20) claims 1-5 | 1-46 |
| X | CN 109451591 A (UNIVERSITY OF ELECTRONIC SCIENCE AND TECHNOLOGY OF CHINA) 08 March 2019 (2019-03-08) claims 1-6 | 1-46 |
| X | CN 110266618 A (UNIVERSITY OF ELECTRONIC SCIENCE AND TECHNOLOGY OF CHINA) 20 September 2019 (2019-09-20) claim 1 | 1-46 |
| A | US 2022077886 A1 (HUAWEI TECHNOLOGIES CO., LTD.) 10 March 2022 (2022-03-10) entire document | 1-46 |
| A | WO 2021119941 A1 (HUAWEI TECHNOLOGIES CO., LTD.) 24 June 2021 (2021-06-24) entire document | 1-46 |

☐ Further documents are listed in the continuation of Box C. ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **28 October 2022** | **25 November 2022** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

International application No.

**PCT/CN2022/085901**

| Patent document cited in search report | | | Publication date (day/month/year) | Patent family member(s) | | | Publication date (day/month/year) |
|---|---|---|---|---|---|---|---|
| CN | 110545128 | A | 06 December 2019 | None | | | |
| CN | 110601738 | A | 20 December 2019 | None | | | |
| CN | 109451591 | A | 08 March 2019 | None | | | |
| CN | 110266618 | A | 20 September 2019 | None | | | |
| US | 2022077886 | A1 | 10 March 2022 | WO | 2020233231 | A1 | 26 November 2020 |
| | | | | EP | 3952119 | A1 | 09 February 2022 |
| WO | 2021119941 | A1 | 24 June 2021 | None | | | |

Form PCT/ISA/210 (patent family annex) (January 2015)